(19) Europäisches Patentamt
European Patent Office
Office européen des brevets

(11) **EP 4 769 318 A1**

(12) **EUROPEAN PATENT APPLICATION**

(43) Date of publication:
**01.07.2026 Bulletin 2026/27**

(21) Application number: **25227126.7**

(22) Date of filing: **23.12.2025**

(51) International Patent Classification (IPC):
**G06T 12/20** (2026.01)

(52) Cooperative Patent Classification (CPC):
**G06T 12/20;** G06T 2211/412; G06T 2211/441

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **24.12.2024 CN 202411928855**

(71) Applicant: **Shanghai United Imaging Healthcare Co., Ltd.**
**Shanghai 201807 (CN)**

(72) Inventors:
• **LONG, Xiaoyun**
 **Shanghai, 201807 (CN)**
• **LV, Yang**
 **Shanghai, 201807 (CN)**

(74) Representative: **Murgitroyd & Company**
**165-169 Scotland Street**
**Glasgow G5 8PL (GB)**

(54) **RECONSTRUCTION METHOD OF EMISSION COMPUTED TOMOGRAPHY IMAGE, APPARATUS, DEVICE, AND STORAGE MEDIUM**

(57) A reconstruction method of an Emission Computed Tomography image, an apparatus, a device, and a storage medium are provided in the present invention. The method includes: acquiring a first ECT image sequence, inputting the first ECT image sequence into a trained intermediate frame prediction network to obtain an estimated second ECT image sequence, and reconstructing a target second ECT image sequence based on the estimated second ECT image sequence serving as a prior image. Temporal resolutions of both the target second ECT image sequence and the estimated second ECT image sequence are higher than that of the first ECT image sequence.

FIG. 2

**(Cont. next page)**

FIG. 3

**Description**

**CROSS-REFERENCE TO RELATED APPLICATION**

This application claims priority to Chinese patent application No. 202411928855.0, filed on December 24, 2024.

**TECHNICAL FIELD**

The present invention relates to the field of medical image processing technology, and in particular, to a reconstruction method of an Emission Computed Tomography image, an apparatus, a computer device, a storage medium, and a computer program product.

**BACKGROUND**

An English full name of the emission computer tomography technology is Emission Computed Tomography, which is referred to as ECT for short. This technology mainly performs imaging by using radiation emitted by a radioactive tracer in a subject, and an image obtained by using this technology may be referred to as an ECT image.
When performing an iterative reconstruction of the ECT image, if an attempt is made to further improve a temporal resolution and shorten a single frame duration, projection data that participates in the iterative reconstruction is further reduced, and in this case, it continues to rely on prior information of an ECT image in which a single frame duration is longer, a slight change in a concentration distribution of a radioactive tracer may not be sufficiently captured at a high temporal resolution.

**SUMMARY**

According to various embodiments of the present invention, a reconstruction method of an Emission Computed Tomography image, an apparatus, a computer device, a storage medium, and a computer program product are provided.
A reconstruction method of an Emission Computed Tomography image is provided in the present invention. The method includes: acquiring a first ECT image sequence, inputting the first ECT image sequence into a trained intermediate frame prediction network to obtain an estimated second ECT image sequence; and reconstructing a target second ECT image sequence based on the estimated second ECT image sequence serving as a prior image. Temporal resolutions of both the target second ECT image sequence and the estimated second ECT image sequence are higher than that of the first ECT image sequence.
In an embodiment, acquiring the first ECT image sequence includes: acquiring raw data by scanning with an ECT scanning device, processing the raw data to obtain first projection data in a target period, and reconstructing the first ECT image sequence according to the first projection data in the target period.
In an embodiment, processing the raw data to obtain the first projection data in the target period includes: dividing the raw data according to a temporal resolution of the first ECT image sequence to obtain the first projection data in the target period.
In an embodiment, inputting the first ECT image sequence into the trained intermediate frame prediction network to obtain the estimated second ECT image sequence further includes: inputting the first ECT image sequence into the trained intermediate frame prediction network to obtain a corresponding intermediate frame sequence, and inserting the intermediate frame sequence into the first ECT image sequence to obtain the estimated second ECT image sequence.
In an embodiment, inputting the first ECT image sequence into the trained intermediate frame prediction network to obtain the corresponding intermediate frame sequence further includes: inputting partial images of the first ECT image sequence into the trained intermediate frame prediction network based on difference between adjacent images in the first ECT image sequence to obtain the corresponding intermediate frame sequence.
In an embodiment, inputting the first ECT image sequence into the trained intermediate frame prediction network to obtain the corresponding intermediate frame sequence further includes: dividing the first ECT image sequence into a plurality of image block sequences, inputting the plurality of image block sequences into the intermediate frame prediction network to obtain intermediate frame sub-sequences corresponding to the plurality of image block sequences, obtaining an intermediate frame sequence according to the intermediate frame sub-sequences corresponding to the plurality of image block sequences. First ECT images in a same image block sequences are temporally consecutive first ECT images.
In an embodiment, inputting the first ECT image sequence into the trained intermediate frame prediction network to obtain the estimated second ECT image sequence further includes: performing block processing on the first ECT image sequence to obtain a plurality of image block sequences, traversing the plurality of image block sequences, for each of the plurality of image block sequences, and calculating a difference value of adjacent images in the image block sequence; in response to the difference value of any two adjacent images in the image block sequence reaching a preset threshold, inputting the image block sequence into the trained intermediate frame prediction network, and performing frame insertion processing on the image block sequence according to an output result of the intermediate frame prediction network, to obtain an image block sequence after frame insertion; and arranging and integrating a plurality of image block sequences after frame insertion to obtain the estimated second ECT image sequence.

In an embodiment, the method further includes: in response to the difference value of any two adjacent images in the image block sequence not reaching the preset threshold, inserting an intermediate image between the two adjacent images in the image block sequence, to obtain an image block sequence after frame insertion. The intermediate image is obtained based the two adjacent images.

In an embodiment, obtaining the intermediate frame sequence according to the intermediate frame sub-sequences corresponding to the plurality of image block sequences includes: acquiring timestamps of intermediate frames in the intermediate frame sub-sequences corresponding to the plurality of image block sequences, and sorting all the intermediate frames according to the timestamps to obtain the intermediate frame sequence.

In an embodiment, inserting the intermediate frame sequence into the first ECT image sequence to obtain the estimated second ECT image sequence includes: acquiring timestamps of frames of the first ECT image sequence, and inserting the intermediate frame sequence into the first ECT image sequence according to the timestamps of the intermediate frames in the intermediate frame sub-sequences corresponding to the plurality of image block sequences and the timestamps of frames of the first ECT image sequence, to obtain the estimated second ECT image sequence.

**In** an embodiment, the intermediate frame prediction network is configured to acquire a quantity difference between the quantity of first ECT images in a target period and the quantity of second ECT images in the target period, divide the quantity difference by the quantity of first ECT images in the target period, and take a divided result as the quantity of intermediate frames in each of the plurality of image block sequences.

In an embodiment, acquiring the trained intermediate frame prediction network further includes: selecting several frames of ECT sample images at intervals in an ECT sample image sequence to obtain an input image sequence, obtaining a training target according to an ECT sample image located among the selected frames of ECT sample images, and obtaining the intermediate frame prediction network according to the input image sequence and the training target.

In an embodiment, before obtaining the trained intermediate frame prediction network by training according to the input image sequence and the training target, the method further includes: training the intermediate frame prediction network based on a natural image sample set. The natural image sample set includes a plurality of natural images and a target natural image, a timestamp of the target natural image and timestamps of the plurality of natural images are distributed at interval, and the quantity of images in the natural image sample set is greater than the total quantity of images in the input image sequence and the training target.

In an embodiment, reconstructing the target second ECT image sequence based on the estimated second ECT image sequence serving as the prior image further includes: obtaining a first spatial kernel matrix based on the estimated second ECT image sequence serving as the prior image, obtaining a first temporal kernel matrix according to second projection data, and reconstructing the target second ECT image sequence according to the first spatial kernel matrix and the first temporal kernel matrix. A single frame duration corresponding to the second projection data is coupled to the temporal resolution of the second ECT image sequence.

In an embodiment, obtaining the first spatial kernel matrix based on the estimated second ECT image sequence serving as the prior image includes: obtaining the first spatial kernel matrix according to a spatial kernel function, spatial feature vectors including pixel values corresponding to the estimated second ECT image sequence, and a parameter for adjusting weight calculation.

In an embodiment, the method further includes searching for each pixel by a k neighbor algorithm in machine learning.

In an embodiment, obtaining the first temporal kernel matrix according to the second projection data further includes: obtaining the first temporal kernel matrix according to a temporal kernel function, temporal feature vectors corresponding to frames of the second projection data, a parameter for adjusting weight calculation, time midpoints of the frames of the second projection data, and a time window width.

In an embodiment, reconstructing the target second ECT image sequence according to the first spatial kernel matrix and the first temporal kernel matrix includes: acquiring a Kronecker product of the first spatial kernel matrix and the first temporal kernel matrix as a spatial-temporal kernel matrix, performing iterative reconstruction according to the spatial-temporal kernel matrix and an Expectation-Maximization algorithm to obtain the target second ECT image sequence.

In an embodiment, the method further includes dividing raw data by scanning with an ECT scanning device in a target period according to the temporal resolution of the second ECT image sequence to obtain the second projection data.

In an embodiment, reconstructing the target second ECT image sequence based on the estimated second ECT image sequence serving as the prior image further includes: taking the estimated second ECT image sequence as the prior image, and taking the prior image as an iterative initial image, and inputting the iterative initial image into a reconstruction algorithm to obtain the target second ECT image sequence.

In an embodiment, the method further includes: acquiring a third ECT image sequence, and reconstructing the first ECT image sequence according to the third ECT image sequence and first projection data. A temporal resolution of the third ECT image sequence is lower than that of the first ECT image sequence. A single frame duration corresponding to the first projection data is coupled to the temporal resolution of the first ECT image sequence.

In an embodiment, reconstructing the first ECT image sequence according to the third ECT image sequence and the first projection data further includes: obtaining a second spatial kernel matrix according to the third ECT image sequence, obtaining a second temporal kernel matrix according to the first projection data, and reconstructing the first ECT image sequence according to the second spatial kernel matrix and the second temporal kernel matrix.

A reconstruction method of an ECT image is provided in the present invention, including: acquiring ECT image data, obtaining a first ECT image sequence by image reconstruction based on the ECT image data, generating a plurality of estimated second ECT images based on the first ECT image sequence, and reconstructing a target second ECT image based on the plurality of first ECT images and the plurality of estimated second ECT images. The first ECT image sequence includes a plurality of first ECT images corresponding to a plurality of first timestamps, and a plurality of second timestamps corresponding to the plurality of estimated second ECT images are distributed at intervals with the plurality of first timestamps.

In an embodiment, a time interval between at least two adjacent timestamps in the plurality of second timestamps is less than that between any two adjacent timestamps in the plurality of first timestamps, at least one timestamp in the plurality of second timestamps is not include in the plurality of first timestamps, or at least one timestamp in the plurality of second timestamps is between two adjacent timestamps in the plurality of first timestamps.

A reconstruction apparatus of an Emission Computed Tomography image is provided in the present invention, the apparatus includes an image acquiring module, an intermediate frame prediction module, and a reconstructing module.

The image acquiring module is configured for acquiring a first ECT image sequence. The first ECT image sequence is obtained by scanning with an ECT scanning device.

The intermediate frame prediction module is configured for inputting the first ECT image sequence into a trained intermediate frame prediction network to obtain an estimated second ECT image sequence.

The reconstructing module is configured for reconstructing a target second ECT image sequence based on the estimated second ECT image sequence serving as a prior image.

A computer device is provided in the present invention, including a memory and a processor. The memory stores a computer program, and when the computer program is executed by the processor, the reconstruction method of the ECT image is realized.

A computer-readable storage medium is provided in the present invention, storing a computer program. The computer program is executed by a processor to perform the reconstruction method of the ECT image.

A computer program product is provided in the present invention, storing a computer program. The computer program is executed by a processor to perform the reconstruction method of the ECT image.

Details of one or more embodiments of the present invention are set forth in the accompanying drawings and description below to make other features, objects, and advantages of the present invention clearer and more comprehensible.

## BRIEF DESCRIPTION OF THE DRAWINGS

In order to illustrate the technical solutions in the embodiments of the present invention or the related art more clearly, the drawings used in the embodiments or the related art will be described briefly. Apparently, the following described drawings are merely for the embodiments of the present invention, and other drawings can be derived by one skilled in the art without any creative effort.

FIG. 1 is a schematic flowchart of a reconstruction method of an ECT image in an embodiment.

FIG. 2 is a schematic training diagram of an intermediate frame prediction network in an embodiment.

FIG. 3 is a schematic flowchart of acquiring an estimated second ECT image sequence in an embodiment.

FIG. 4 is a schematic flowchart of acquiring a target second ECT image sequence in an embodiment.

FIG. 5 is a schematic flowchart of acquiring a target second ECT image sequence in another embodiment.

FIG. 6 is a structural block diagram of a reconstruction apparatus of an ECT image in an embodiment.

FIG. 7 is an internal structural diagram of a computer device in an embodiment.

**DETAILED DESCRIPTION**

The present invention will now be described in detail with reference to the accompanying drawings and embodiments in order to make the objects, technical solutions, and advantages of the present invention more clear. It should be understood that the specific embodiments described herein are merely for explaining the present invention, and not intended to limit the present invention.

A reconstruction method of an ECT image provided in the present invention relates to an ECT scanning device, and the ECT scanning device includes a PET scanning device and an SPECT scanning device. The method may be used in PET image reconstruction, or may be used in SPECT image reconstruction. In a PET image reconstruction scenario, an ECT image includes a PET image; In a SPECT image reconstruction scenario, the ECT image includes a SPECT image. The full English name of the PET is Positron Emission Tomography. The full English name of SPECT is Single-Photon Emission Computed Tomography.

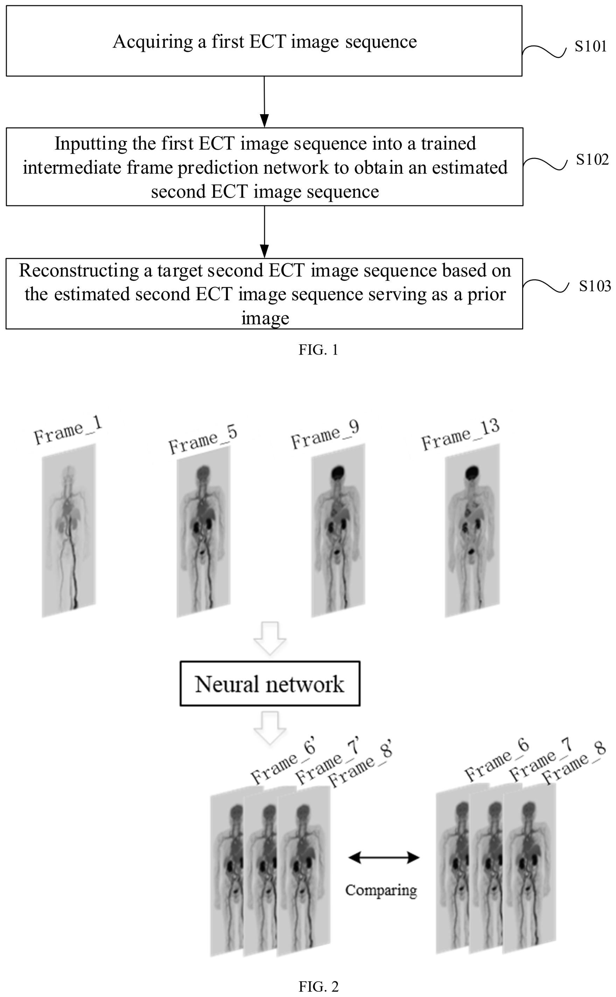

The reconstruction method of the ECT image provided in the present invention may be performed by a computer device. The method includes the steps shown in FIG. 1.

Step 101 includes acquiring a first ECT image sequence.

The first ECT image sequence is obtained by image reconstruction based on scanning data with an ECT scanning device or scanning data stored in a memory.

Temporal resolutions of both a target second ECT image sequence and an estimated second ECT image sequence are higher than that of the first ECT image sequence. An estimated second ECT image sequence and the target second ECT image sequence described in the present invention belong to a same kind of image sequence, i.e., the estimated second ECT image sequence and the target second ECT image sequence have a same single frame duration. A temporal resolution of the second ECT image sequence is higher than that of the first ECT image sequence.

The first ECT image and the second ECT image may be in relative concepts. A single-frame ECT image may be obtained by reconstructing based on projection data, and the projection data may have a corresponding single frame duration. In a case that there are two different types of single frame durations, one single frame duration may be longer than the other single frame duration, a long single frame duration may be referred to as a first single frame duration, and a short single frame duration may be referred to as a second single frame duration. In some scenarios, the order of the first single frame duration may be several tenths of a second (e.g., 0.1 second), and the order of the second single frame duration may be several hundredths of a second (e.g., 0.025 second).

When an ECT image obtained by reconstructing the projection data in the first single frame duration is referred to as a first ECT image, an ECT image obtained by reconstructing the projection data in the second single frame duration may be referred to as a second ECT image. For example, the first single frame duration may be 0.1 second, and the second single frame duration may be 0.025 second. Correspondingly, the projection data in 0.1 second may be reconstructed to obtain the first ECT image, and the projection data in 0.025 second may be reconstructed to obtain the second ECT image. A temporal resolution of the first ECT image sequence may be 0.1 second per frame, and a temporal resolution of the second ECT image sequence may be 0.025 second per frame. A temporal resolution of the second ECT image sequence is higher than that of the first ECT image sequence.

After obtaining raw data of the specified duration (e.g., one hour) by scanning with the ECT scanning device, the raw data may be processed to obtain the projection data in the specified duration. The projection data in a target period may be determined from the projection data in the specified duration. A period of interest in the specified duration may be taken as the target period. For example, the 40th second to the 42th second in the specified duration may be taken as the period of interest, and the 40th second to the 42th second may be taken as the target period.

In the following examples, the temporal resolution of the first ECT image sequence may be 0.1 second per frame, the temporal resolution of the second ECT image sequence may be 0.025 second per frame, and the target period may be the 40th second to the 42th second in the specified duration.

After obtaining the projection data from the 40th second to the 42th second, the projection data from the 40th second to the 42th second may be divided according to a time interval of 0.1 second, to obtain 20 pieces of 0.1 second projection data. The 20 pieces of 0.1 second projection data may be reconstructed to obtain 20 first ECT images, respectively, and the first ECT images may have respective timestamps. For example, the timestamp of the first first ECT image may be corresponding to from the 40th second to the 40.1th second, and the timestamp of the second first ECT image may be corresponding to from the 40.1th second to the 40.2th seconds. The first ECT image sequence may be formed according to a time sequence of the timestamps of the first ECT images.

Step 102 includes inputting the first ECT image sequence into a trained intermediate frame prediction network to obtain an estimated second ECT image sequence.

As in the foregoing example, the temporal resolution of the first ECT image sequence may be 0.1 second/frame, the temporal resolution of the second ECT image sequence may be 0.025 second/frame, and the target period may be the 40th second to the 42th seconds in the specified duration. In this example, since the temporal resolution of the second ECT image sequence is 0.025 second/frame, the quantity of frames of second ECT images from the 40th second to the 42th second is 80.

The first ECT image sequence from the 40th second to the 42th second may include 20 first ECT images.

**In** some embodiments, the first ECT image sequence may be directly input into a trained intermediate frame prediction network after being divided into a plurality of image block sequences. Specifically, the step of inputting the first ECT image sequence into the intermediate frame prediction network includes: dividing the first ECT image sequence into a plurality of image block sequences, in which first ECT images in a same image block sequence are temporally consecutive; inputting the plurality of image block sequences into the intermediate frame prediction network to obtain intermediate frame sub-sequences corresponding to the plurality of image block sequences; obtaining an intermediate frame sequence according to the intermediate frame sub-sequences; and inserting the intermediate frame sequence into the first ECT image sequence to obtain the estimated second ECT image sequence.

Optionally, prior to inputting, block processing may be performed on the first ECT image sequence first to obtain a plurality of image block sequences. All the plurality of image block sequences may be traversed, and for each of the plurality of image block sequences, a difference value of adjacent images in the image block sequence may be calculated. In response to the difference value of any two adjacent images in the image block sequence reaching a preset threshold, the image block sequence may be input into the trained intermediate frame prediction network. Frame insertion processing may be performed on the image block sequence according to an output result of intermediate frame prediction network, to obtain an image block sequence after frame insertion. The difference value reaching the preset threshold means that the difference value is greater than or equal to the preset threshold. In response to the difference value of any two adjacent images in the image block sequence not reaching the preset threshold, it may indicate that tracer distribution between adjacent time frames in the image block sequence does not change, an intermediate image may be inserted between the two adjacent images in the image block sequence, so as to obtain an image block sequence after frame insertion. The intermediate image may be obtained based the two adjacent images. Alternatively, the intermediate image may be an average image of the two adjacent images. Alternatively, either image of the two adjacent images may be copied to obtain a copied image, and the copied image may be inserted between adjacent images of the image block sequence, so as to obtain an image block sequence after frame insertion. Then, the image block sequences after frame insertion obtained according to the foregoing operation procedure may be arranged and integrated in an order, so as to obtain 80 second ECT images from the 40th second to the 42th second. The difference value of the adjacent images in the image block sequence may be calculated in various manners, such as calculating an average value of absolute values of pixel differences corresponding to adjacent images, calculating some statistical feature differences (e.g., corresponding to gray histogram differences) of adjacent images, or a difference based on a neural network. This optional step serves as an optimization to improve computational efficiency.

The obtained 80 second ECT images may be estimated images, and accuracy may not meet a requirement. Therefore, the obtained 80 second ECT images may be referred to as estimated second ECT images. The obtained 80 estimated second ECT images may have respective timestamps, and the obtained 80 estimated second ECT images may form an estimated second ECT image sequence according to a time sequence of the timestamps. In the estimated second ECT image sequence, a timestamp of a first estimated second ECT image may correspond to the 40th second to the 40.025th second, and a timestamp of the last estimated second ECT image may correspond to the 41.975th second to the 42th second.

Step 103 includes reconstructing the target second ECT image sequence based on the estimated second ECT image sequence serving as a prior image.

This may be described by using the foregoing example, and the estimated second ECT image sequence from the 40th second to the 42th second may be obtained in the foregoing manner. The estimated second ECT image sequence may more fully reflect a slight change of the concentration distribution of the radioactive tracer at a high temporal resolution. Therefore, the estimated second ECT image sequence may be used as the prior image for reconstruction to obtain 80 second ECT images from the 40th second to the 42th second. The accuracy of these second ECT images may be significantly improved compared with the estimated second ECT images. Therefore, these second ECT images may be referred to as target second ECT images. The target second ECT image sequence may be formed according to a time sequence of the timestamps of the 80 target second ECT images. In the target second ECT image sequence, a timestamp of a first target second ECT image may be corresponding to the 40th second to the 40.025th second, and a timestamp of the last target second ECT image may be corresponding to the 41.975th second to the 42th second. The target second ECT image sequence may be corresponding to the 40th second to the 42th second.

In the foregoing reconstruction method of the ECT image, the estimated second ECT image sequence and the target second ECT image sequence belong to a same kind of image sequence. The temporal resolution of the second ECT image sequence is higher than that of the first ECT image sequence. In the present invention, the first ECT image sequence is acquired, and the first ECT image sequence is obtained by scanning with the ECT scanning device. The first ECT image sequence is input into the trained intermediate frame prediction network to obtain the estimated second ECT image sequence. The estimated second ECT image sequence may more fully reflect the slight change of the concentration distribution of the radioactive tracer at the high temporal resolution, and make better prior guidance for reconstructing the target second ECT image sequence, which facilitates reducing a noise level of the target second ECT image sequence and improving image quality.

In an embodiment, inputting the first ECT image sequence into the trained intermediate frame prediction network to obtain the estimated second ECT image sequence further includes: dividing the first ECT image sequence into a plurality of image block sequences, inputting the plurality of image block sequences into the intermediate frame prediction network to obtain intermediate frame sub-sequences corresponding to the plurality of image block sequences, obtaining an intermediate frame sequence according to the intermediate frame sub-sequences corresponding to the plurality of image block sequences, and inserting the intermediate frame sequence into the first ECT image sequence to obtain the estimated second ECT image sequence. First ECT images in a same image block sequence are temporally consecutive first ECT images.

During training, the quantity of intermediate frames that the intermediate frame prediction network needs to predict according to an image block sequence may be specifically determined in a manner: acquiring a quantity difference between the quantity of the first ECT images in the target period and the quantity of the second ECT images in the target period, dividing the quantity difference by the quantity of the first ECT images in the target period, and taking a dividing result as the quantity of intermediate frames that need to be predicted. The quantity of intermediate frames that the intermediate frame prediction network needs to predict according to an image block sequence may be the quantity of images included in an intermediate frame subsequence corresponding to a single image block sequence.

This may be described by using the foregoing example, in the foregoing example, the temporal resolution of the first ECT image sequence may be 0.1 second/frame, the temporal resolution of the second ECT image sequence may be 0.025 second/frame, and the target period may be the 40th second to the 42th seconds in the specified duration.

The first ECT image sequence from the 40th second to the 42th second may include 20 first ECT images, which may be denoted as {I_1, I_2, I_3,..., I_20}. The temporal resolution of the second ECT image sequence may be 0.025 second/frame. Therefore, the quantity of frames of the second ECT images from the 40th second to the 42th second may be 80. It may be determined that a quantity difference between the quantity of the first ECT images from the 40th second to the 42th second and the quantity of the second ECT images from the 40th second to the 42th second is 60, 60 may be divided by the quantity (i.e., 20) of the first ECT images from the 40th second to the 42th second, and an obtained division result may be 3. Therefore, the quantity of intermediate frames that the intermediate frame prediction network needs to predict according to an image block sequence may be 3.

As input data of the intermediate frame prediction network, the image block sequence may include at least two images.

Example one: if the image block sequence includes four images, the following processing may be specifically performed.

Projection data from the 39.9th second to the 40th second in the specified duration may be acquired, and the first ECT image may be reconstructed according to the projection data from the 39.9th second to the 40th second. A timestamp of the first ECT image may be corresponding to from the 39.9th second to the 40th second, the first ECT image is not in the target period from the 40th second to the 42th second, and the first ECT image may be denoted as I_0.

Projection data from the 42th second to the 42.1th second in the specified duration may be acquired, and the first ECT image may be reconstructed according to the projection data from the 42th second to the 42.1th second. A timestamp of the first ECT image may be corresponding to from the 42th second to the 42.1th second, and the first ECT image is not in the target period from the 40th second to the 42th second, and the first ECT image may be denoted as I_21.

Projection data from the 42.1th second to the 42.2th second in the specified duration may be acquired, and the first ECT image may be reconstructed according to the projection data from the 42.1th second to the 42.2th second. A timestamp of the first ECT image may be corresponding to from the 42.1th second to the 42.2th second, and the first ECT image is not in the target period from the 40th second to the 42th second, and the first ECT image may be denoted as I_22.

According to the first ECT image sequence {I_1, I_2, I_3,..., I_20} from the 40th second to the 42th second, the first ECT image I_0 corresponding to the 39.9th second to the 40th second, the first ECT image I_21 corresponding to the 42th second to the 42.1th second, and the first ECT image I_22 corresponding to the 42.1th second to the 42.2th second, a predicted image sequence {I_0, I_1, I_2, I_3,..., I_20, I_21, I_22} may be obtained. Four adjacent first ECT images in the predicted image sequence may be taken as an image block sequence, and 20 image block sequences may be obtained, such as {I_0, 1_1, I _ 2, I_3}, {I_1, I_2, I_3, I_4}, ..., and {I_19, I_20, I_21, I_22}.

For each image block sequence, the image block sequence may be input into the intermediate frame prediction network to obtain three intermediate frames corresponding to the image block sequence, and timestamps of the three intermediate frames may be located between timestamps of two first ECT images in the middle of the image block sequence. For example, the image block sequence includes I_0, I_1, I_2, and I_3. After the image block sequence is input into the intermediate frame prediction network, three intermediate frames may be obtained, the timestamps of the three intermediate frames may be between timestamps of I_1 and I_2, and the three intermediate frames may be denoted as I_1a, I_1b, and I_1c. That is, an intermediate frame subsequence corresponding to the image block sequence {I_0, I_1, I_2, I_3} may be {I_1a, I_1b, I_1c}.

In this manner, intermediate frame subsequences corresponding to other image block sequences may be obtained, for example, an intermediate frame subsequence corresponding to an image block sequence {I_1, I_2, I_3, I_4} may be {I_2a, I_2b, I_2c}, and an intermediate frame subsequence corresponding to an image block sequence {I_2, I_3, I_4, I_5} may be {I_3a, I_3b, I_3c}. Intermediate frame subsequences corresponding to the 20 image block sequences may form an intermediate frame sequence {I_1a, I_1b, I_1c, I_2a, I_2b, I_2c, I_3a, I_3b, I_3c, ..., I_20a, I_20b, I_20c}.

According to the timestamp of each intermediate frame, the intermediate frame sequence may be inserted into the first ECT image sequence {I_1, I_2, I_3, ..., I_20} from the 40th second to the 42th second, to obtain {I_1, I_1a, I_1b, I_1c, I_2, I_2a, I_2b, I_2c, I_3, ..., I_20, I_20a, I_20b, I_20c}, and the obtained sequence may be taken as the estimated second ECT image sequence from the 40th to the 42th seconds.

Example two: if the image block sequence includes two images, the following processing may be specifically performed.

Projection data from the 42th second to the 42.1th second in the specified duration may be acquired, and the first ECT image may be reconstructed according to the projection data from the 42th second to the 42.1th second. A timestamp of the first ECT image may be corresponding to from the 42th second to the 42.1th second, and the first ECT image is not in the target period from the 40th second to the 42th second, and the first ECT image may be denoted as I_21.

According to the first ECT image sequence {I_1, I_2, I_3,..., I_20} from the 40th second to the 42th second, and the first ECT image I_21 corresponding to the 42th second to the 42.1th second, a predicted image sequence {I_0, I_1, I_2, I_3,..., I_20, I_21} may be obtained. Two adjacent first ECT images in the predicted image sequence may be taken as an image block sequence, and 20 image block sequences may be obtained.

For each image block sequence, the image block sequence may be input into the intermediate frame prediction network to obtain three intermediate frames corresponding to the image block sequence, and timestamps of the three intermediate frames may be located between timestamps of two first ECT images in the image block sequence. For example, the image block sequence includes I_1 and I_2. After the image block sequence is input into the intermediate frame prediction network, three intermediate frames may be obtained, the timestamps of the three intermediate frames may be between timestamps of I_1 and I_2, and the three intermediate frames may be denoted as I_1a, I_1b, and I_1c. That is, an intermediate frame subsequence corresponding to the image block sequence {I_1, I_2} may be {I_1a, I_1b, I_1c}.

In this manner, intermediate frame subsequences corresponding to other image block sequences may be obtained, for example, an intermediate frame subsequence corresponding to an image block sequence {I_2, I_3} may be {I_2a, I_2b, I_2c}, and an intermediate frame subsequence corresponding to an image block sequence {I_3, I_4} may be {I_3a, I_3b, I_3c}. Intermediate frame subsequences corresponding to the 20 image block sequences may form an intermediate frame sequence {I_1a, I_1b, I_1c, I_2a, I_2b, I_2c, I_3a, I_3b, I_3c, ..., I_20a, I_20b, I_20c}.

According to the timestamp of each intermediate frame, the intermediate frame sequence may be inserted into the first ECT image sequence {I_1, I_2, I_3, ..., I_20} from the 40th second to the 42th second, to obtain {I_1, I_1a, I_1b, I_1c, I_2, I_2a, I_2b, I_2c, I_3, ..., I_20, I_20a, I_20b, I_20c}, and the obtained sequence may be taken as the estimated second ECT image sequence from the 40th to the 42th seconds.

In this embodiment, the first ECT image sequence may be first divided into the plurality of image block sequences, and first ECT images in a same image block sequence may be temporally consecutive first ECT images. The more images included in the same image block sequence, the more accurate the prediction. Thus, the obtained estimated second ECT image sequence may better reflect the slight change of the concentration distribution of the radioactive tracer at the high temporal resolution, and improve reconstruction quality.

In an embodiment, acquiring the trained intermediate frame prediction network may include: selecting several frames of ECT sample images at intervals from an ECT sample image sequence to obtain an input image sequence, obtaining a training target according to an ECT sample image located among the selected ECT sample images, and obtaining the intermediate frame prediction network according to the input image sequence and the training target.

In one of the foregoing examples, the quantity of images included in the image block sequence that is taken as the input data of the intermediate frame prediction network may be 4, the quantity of intermediate frames that the intermediate frame prediction network needs to predict according to an image block sequence may be 3, and the three intermediate frames that are output by the intermediate frame prediction network may be located between two images in the middle of the image block sequence. Therefore, a corresponding training sample may be constructed, and an example may be as follows.

An ECT image sequence with a certain temporal resolution may be acquired, and the ECT image sequence may include a plurality of consecutive ECT images. The ECT image sequence may be taken as an ECT sample image sequence. When the ECT sample image sequence includes 50 ECT sample images, the 50 ECT sample images may be denoted as Frame_1, Frame_2, ..., and Frame_50, respectively.

Frame_1, Frame_5, Frame_9, and Frame_13 may be selected from the ECT sample image sequence as an input image sequence, and Frame_6, Frame_7, and Frame_8 located between Frame_5 and Frame_9 may be taken as training targets. Referring to FIG. 2, after Frame_1, Frame_5, Frame_9, and Frame_13 are input to a neural network, intermediate prediction frames output by the neural network may be obtained, which may be denoted as Frame_6', Frame_7', and Frame_8'. Then, a loss value may be obtained according to a difference between Frame_6' and Frame_6, a difference between Frame_7' and Frame_7, and a difference between Frame_8' and Frame_8.

Similarly, Frame_2, Frame_6, Frame_10, and Frame_14 may also be taken as an input image sequence, and Frame_7, Frame_8, and Frame_9 located between Frame_6 and Frame_10 may be taken as training targets. After Frame_2, Frame_6, Frame_10, and Frame_14 are input to the neural network, intermediate prediction frames output by the neural network may be obtained, which may be denoted as Frame _7', Frame_8', and Frame _9'. Then, a loss value may be obtained according to a difference between Frame_7' and Frame_7, a difference between Frame_8' and Frame_8, and a difference between Frame_9' and Frame_9.

According to the obtained loss value, parameters of the neural network may be gradually adjusted until a difference between the intermediate prediction frames output by the neural network and corresponding training targets reaches a preset condition, so as to complete training of the intermediate frame prediction network.

In the present embodiment, in the ECT sample image sequence, several frames of ECT sample images may be selected at intervals to obtain the input image sequence. The training targets may be obtained according to ECT sample images located between the selected ECT sample images. Training may be performed according to the input image sequence and the training targets, so as to obtain an intermediate frame prediction network with relatively accurate prediction, so that the obtained estimated second ECT image sequence can better reflect the slight change of the concentration distribution of the radioactive tracer at the high temporal resolution, and reconstruction quality is improved.

In an embodiment, reconstructing the target second ECT image sequence based on the estimated second ECT image sequence serving as the prior image may further include: obtaining a first spatial kernel matrix based on the estimated second ECT image sequence serving as the prior image, obtaining a first temporal kernel matrix according to second projection data, and reconstructing the target second ECT image sequence according to the first spatial kernel matrix and the first temporal kernel matrix. A single frame duration corresponding to the second projection data may be coupled to the temporal resolution of the second ECT image sequence.

This may be described by using the foregoing example, after the estimated second ECT image sequence {I_1, I_1a, I_1b, I_1c, I_2, I_2a, I_2b, I_2c, I_3, ..., I_20, I_20a, I_20b, I_20c} is obtained, the estimated second ECT image sequence may be taken as the prior image, and a spatial kernel matrix may be obtained according to the estimated second ECT image sequence. To distinguish, the spatial kernel matrix may be referred to as the first spatial kernel matrix. The spatial kernel matrix is configured to describe correlation between adjacent pixels.

A formula for calculating the spatial kernel matrix may be as follows:

$$k_s\left(f_j^s, f_{j'}^s\right) = \begin{cases} \exp\left(-\dfrac{\left\|f_j^s - f_{j'}^s\right\|^2}{2\sigma_s^2}\right), & f_{j'}^s \in \text{kNN of } f_j^s \\ \\ 0, & \text{otherwise} \end{cases}$$

$k_s\left(f_j^s, f_{j'}^s\right)$ represents a spatial kernel function, $f_j^s$ represents a spatial feature vector of pixel values corresponding to the j-th voxel in the ECT image. $\sigma_s^2$ represents a parameter for adjusting weight calculation. A distance between feature vectors of two pixels may be calculated as a description of spatial correlation by a radial Gaussian kernel function. To simplify the calculation, the k neighbor algorithm in machine learning can be used to search for each pixel.

As in the foregoing example, the temporal resolution of the second ECT image sequence may be 0.025 second/frame. In this embodiment, projection data from the 40th second to the 42th second may be divided according to a time interval of 0.025 second, to obtain 80 pieces of projection data, and a single frame duration corresponding to each piece of projection data may be 0.025 second. The projection data may be referred to as the second projection data, and the single frame duration corresponding to the second projection data may be coupled to the temporal resolution of the second ECT image sequence. The 80 pieces of second projection data may have respective timestamps, the timestamp of the first piece of second projection data may be corresponding to from the 40th second to the 40.025th second, and the timestamp of the second piece of second projection data may be corresponding to from the 40.025th second to the 40.05th second. The temporal kernel matrix may be obtained according to the 80 pieces of second projection data. To distinguish, the temporal kernel matrix may be referred to as the first temporal kernel matrix. The temporal kernel matrix is configured to describe correlation of a same pixel at different moments.

A calculation formula of the temporal kernel matrix may be as follows:

$$k_t\left(f_m^t, f_{m'}^t\right) = \begin{cases} \exp\left(-\dfrac{\left\|f_m^t - f_{m'}^t\right\|^2}{2\sigma_t^2}\right), & |\tau_m - \tau_{m'}| < d_t \\ \\ 0, & \text{otherwise} \end{cases}$$

$k_t\left(f_m^t, f_{m'}^t\right)$ represents a temporal kernel function, and $f_m^t$ represents a temporal feature vector corresponding to the m-th frame. $\sigma_t^2$ represents a parameter for adjusting weight calculation, $\tau_m$ represents a time midpoint of the m-th frame, and $d_t$ represents a time window width.

After the first spatial kernel matrix and the first temporal kernel matrix are obtained, a first space-time kernel matrix may be obtained according to the first spatial kernel matrix and the first temporal kernel matrix.

The space-time kernel matrix may be obtained according to the spatial kernel matrix and the temporal kernel matrix, and a corresponding formula may be expressed as follows:

$$\kappa\left(f_{j,m}, f_{j',m'}\right) = \kappa_s\left(f_{j,m}, f_{j',m'}\right) \otimes \kappa_t\left(f_{j,m}, f_{j',m'}\right)$$

$\kappa(f_{j,m}, f_{j',m'})$ represents the space-time kernel matrix, $\kappa_s(f_{j,m}, f_{j',m'})$ represents the spatial kernel matrix, $\kappa_t(f_{j,m}, f_{j',m'})$ represents the temporal kernel matrix; $\otimes$ represents the Kronecker product.

After the first space-time kernel matrix is obtained, iterative reconstruction may be performed with reference to an EM algorithm to obtain the target second ECT image sequence from the 40th second to the 42th second. An English full name of the EM is Expectation-maximization algorithm.

In a PET image reconstruction scenario, the ECT image may include a PET image, and an update formula used in the EM algorithm may be as follows:

$$\widehat{\alpha}^{n+1} = \frac{\widehat{\alpha}^n}{(K_S \otimes K_T)^T P^T A S 1}\left((K_S \otimes K_T)^T P^T \frac{y}{P(K_S \otimes K_T)\widehat{\alpha}^n + (AS)^{-1}r}\right)$$

$\hat{\alpha}^n$ and $\hat{\alpha}^{n+1}$ represent a coefficient image iteration result of the (n) th and (n + 1) th, respectively, T represents a transposition of the matrix, y represents the projection data collected by the system, P represents a system matrix, A represents a dosage, S represents a system sensitivity, and r represents an expectation of a random event and a scattering event.

$$x = (K_S \otimes K_T)\alpha$$

x represents a to-be-reconstructed PET image.

In a SPECT image reconstruction scenario, the ECT image may include the SPECT image. In this case, the foregoing r does not include the expectation of the random event.

In the present embodiment, the estimated second ECT image sequence may more fully reflect the slight change of the concentration distribution of the radioactive tracer at the high temporal resolution. The estimated second ECT image sequence may be taken as the prior image to obtain the first spatial kernel matrix, and the first temporal kernel matrix may be obtained according to the second projection data. According to the first spatial kernel matrix and the first temporal kernel matrix, the target second ECT image sequence with a relatively low noise level can be reconstructed, thereby improving image quality.

In an embodiment, reconstructing the target second ECT image sequence based on the estimated second ECT image sequence serving as the prior image may further include: taking the estimated second ECT image sequence as the prior image, and taking the prior image as an iterative initial image, and inputting the iterative initial image into a reconstruction algorithm to obtain the target second ECT image sequence.

This may be described by using the foregoing example, after obtaining the estimated second ECT image sequence {I_1, I_1a, I_1b, I_1c, I_2, I_2a, I_2b, I_2c, I_3,..., I_20, I_20a, I_20b, I_20c}, the estimated second ECT image sequence may be taken as the priori image, the priori image may be taken as the iterative initial image, i.e., the estimated second ECT image sequence may be taken as the iterative initial image, and reconstruction may be performed with reference to the OSEM algorithm to obtain the target second ECT image sequence from the 40th second to the 42nd second. The English full name of the OSEM is Ordered Subsets Expectation Maximization.

In the present embodiment, the estimated second ECT image sequence may more fully reflect the slight change of the concentration distribution of the radioactive tracer at the high temporal resolution. The estimated second ECT image sequence may be taken as the prior image, the prior image may be taken as the iterative initial image, and the iterative initial image may be input into the reconstruction algorithm. The target second ECT image sequence with a relatively low noise level can be reconstructed without the need to generate the temporal kernel matrix and the spatial kernel matrix, thereby improving image quality.

In an embodiment, the method provided in the present invention may further include: acquiring a third ECT image sequence, and reconstructing the first ECT image sequence according to the third ECT image sequence and first projection data. A temporal resolution of the third ECT image sequence may be lower than that of the first ECT image sequence. A single frame duration corresponding to the first projection data may be coupled to the temporal resolution of the first ECT image sequence.

The third ECT image, the first ECT image, and the second ECT image may be in relative concepts. A single-frame ECT image may be obtained by reconstructing based on projection data, and the projection data may have a corresponding single frame duration. When a single frame duration is longer than the foregoing first single frame duration, the single frame duration may be referred to as a third single frame duration. In some scenarios, the order of the first single frame duration may be several tenths of a second (e.g., 0.1 second), the order of the second single frame duration may be several hundredths of a second (e.g., 0.025 second), and the order of the third single frame duration may be usually several minutes or more (e.g., 5 minutes or 10 minutes). When an ECT image obtained by reconstructing based on the projection data in the first single frame duration is referred to as a first ECT image, an ECT image obtained by reconstructing based on the projection data in the third single frame duration may be referred to as a third ECT image. Accordingly, a temporal resolution of the third ECT image sequence may be lower than that of the first ECT image sequence.

Exemplarily, the first single frame duration may be 0.1 second, the second single frame duration may be 0.025 second, and the third single frame duration may be several minutes or more. After the projection data in the specified duration is obtained, an ECT image may be reconstructed according to the projection data from the 0th minute to the 5th minute in the specified duration and with reference to the OSEM algorithm. A single frame duration of the ECT image may be 5 minutes, the 5 minutes may belong to the third single frame duration, and the ECT image may be referred to as the third ECT image and be denoted as III_1. An ECT image may be reconstructed according to projection data from the 5th minute to the 20th minute in the specified duration and with reference to the OSEM algorithm. A single frame duration of the ECT image may be 15 minutes, the 15 minutes may belong to the third single frame duration, and the ECT image may be referred to as the third ECT image and be denoted as III_2. An ECT image may be reconstructed according to projection data from the 20th minute to the 40th minute in the specified duration and with reference to the OSEM algorithm. A single frame duration of the ECT image may be 20 minutes, the 20 minutes may belong to the third single frame duration, and the ECT image may be referred to as the third ECT image and be denoted as III_3. An ECT image may be reconstructed according to projection data from the 40th minute to the 60th minute in the specified duration and with reference to the OSEM algorithm. A single frame duration of the ECT image may be 20 minutes, the 20 minutes may belong to the third single frame duration, and the ECT image may be referred to as the third ECT image and be denoted as III_4.

A third ECT image sequence {III_1, III_2, III_3, III_4} may be formed according to III_1, III_2, III_3, and III_4.

The projection data from the 40th second to the 42th second may be divided according to a time interval of 0.1 second, to obtain 20 pieces of first projection data, each of which may have a corresponding single frame duration of 0.1 second. The 20 pieces of the first projection data may have respective timestamps. Exemplarily, the timestamp of the first piece of the first projection data may be corresponding to from the 40th second to the 40.1th second, and the timestamp of the second piece of the first projection data may be corresponding to from the 40.1th second to the 40.2th second.

The first ECT image sequence from the 40th second to the 42th second may be reconstructed according to the third ECT image sequence and the 20 pieces of the first projection data.

In the present embodiment, the first ECT image sequence with a relatively low noise level may be reconstructed according to the third ECT image sequence and the first projection data.

In an embodiment, reconstructing the first ECT image sequence according to the third ECT image sequence and the first projection data may further include: obtaining a second spatial kernel matrix according to the third ECT image sequence, obtaining a second temporal kernel matrix according to the first projection data, and reconstructing the first ECT image sequence according to the second spatial kernel matrix and the second temporal kernel matrix.

The spatial kernel matrix may be obtained according to the third ECT image sequence {III_1, III_2, III_3, III_4}. To distinguish, the spatial kernel matrix may be referred to as the second spatial kernel matrix. A temporal kernel matrix may be obtained according to the 20 pieces of the first projection data from the 40th second to the 42th second. To distinguish, the temporal kernel matrix may be referred to as the second temporal kernel matrix. The first ECT image sequence from the 40th second to the 42th second may be reconstructed according to the second spatial kernel matrix and the second temporal kernel matrix, with reference to the EM algorithm.

In the present embodiment, the second spatial kernel matrix may be obtained according to the third ECT image sequence. The second temporal kernel matrix may be obtained according to the first projection data. According to the second spatial kernel matrix and the second temporal kernel matrix, the first ECT image sequence with relatively high quality can be reconstructed, so that a subsequently obtained estimated second ECT image sequence can more fully reflect the slight change in the concentration distribution of the radioactive tracer at the high temporal resolution.

To better understand the foregoing methods, the following describes in detail an application instance of the reconstruction method of the ECT image in the present invention. The application instance may include a third ECT image, a first ECT image, and a second ECT image that are divided by a length of a single frame duration. The order of the single frame duration corresponding to the third ECT image may be several minutes or more, the order of the single frame duration corresponding to the first ECT image may be several tenths of a second, and the order of the single frame duration corresponding to the second ECT image may be several hundredths of a second. For ease of understanding, in the present embodiment, the third ECT image may be referred to as a long-frame ECT image, the first ECT image is referred to as a short-frame ECT image, and the second ECT image is referred to as a super short-frame ECT image. Correspondingly, the projection data whose single frame duration is coupled to the third ECT image sequence may be referred to as long-frame projection data, the projection data whose single frame duration is coupled to the first ECT image sequence may be referred to as short-frame projection data, and the projection data whose single frame duration is coupled to the second ECT image sequence may be referred to as super short-frame projection data.

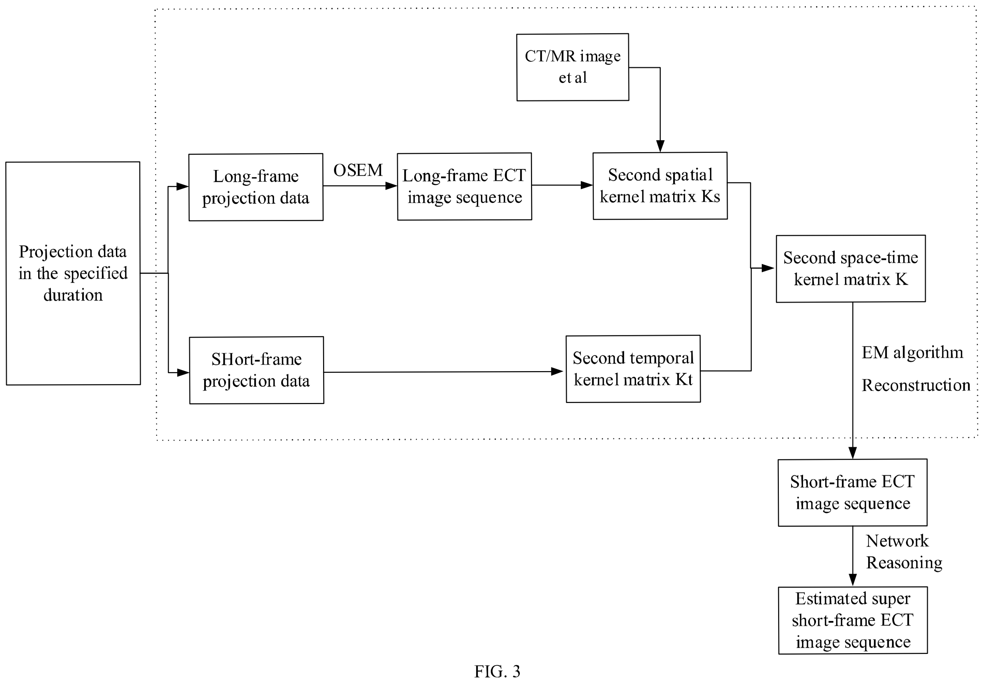

Referring to FIG. 3, after the projection data in the specified duration is obtained, when the specified duration is one hour, a long-frame ECT image III_1 may be reconstructed according to the projection data (belongs to the long-frame projection data) from the 0th minute to the 5th minute in the specified duration and with reference to the OSEM algorithm. A long-frame ECT image III_2 may be reconstructed according to the projection data (belongs to the long-frame projection data) from the 5th minute to the 20th minute in the specified duration and with reference to the OSEM algorithm. A long-frame ECT image III_3 may be reconstructed according to the projection data (belongs to the long-frame projection data) from the 20th minute to the 40th minute in the specified duration and with reference to the OSEM algorithm. A long-frame ECT image III_4 may be reconstructed according to the projection data (belongs to the long-frame projection data) from the 40th minute to the 60th minute in the specified duration and with reference to the OSEM algorithm. Therefore, a long-frame ECT image sequence {III_1, III_2, III_3, III_4} may be obtained. The second spatial kernel matrix Ks may be calculated according to any one of the long-frame ECT image sequence {III_1, III_2, III_3, III_4}, a CT image, or an MR image. The English full name of the CT is Computed Tomography. The English full name of the MR is Magnetic Resonance.

The projection data in the target period may be divided according to a time interval of 0.1 second to obtain several pieces of short-frame projection data in the target period, and the second temporal kernel matrix Kt may be calculated according to the several pieces of short-frame projection data in the target period.

A second space-time kernel matrix K may be obtained according to the second spatial kernel matrix Ks and the second temporal kernel matrix Kt. A short-frame ECT image sequence in the target period may be reconstructed according to the second space-time kernel matrix K and with reference to the EM algorithm.

An estimated super short-frame ECT image sequence in the target period may be obtained according to the short-frame ECT image sequence in the target period and the trained intermediate frame prediction network.

After obtaining the estimated super short-frame ECT image sequence in the target period, a target super short-frame ECT image sequence in the target period may be obtained in two manners.

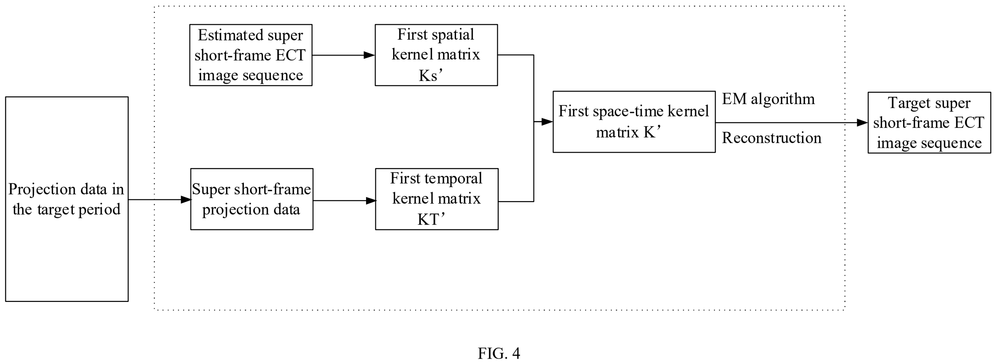

FIG. 4 shows a first manner. Referring to FIG. 4, the first spatial kernel matrix Ks' may be calculated according to the estimated super short-frame ECT image sequence in the target period. The projection data in the target period may be divided according to a time interval of 0.025 second to obtain several pieces of the super short-frame projection data in the target period, and the first temporal kernel matrix Kt' may be calculated according to the several pieces of the super short-frame projection data in the target period. The first space-time kernel matrix K' may be obtained according to the first spatial kernel matrix Ks' and the first temporal kernel matrix Kt'. According to the first space-time kernel matrix K', the target super short-frame ECT image sequence in the target period may be reconstructed with reference to the EM algorithm.

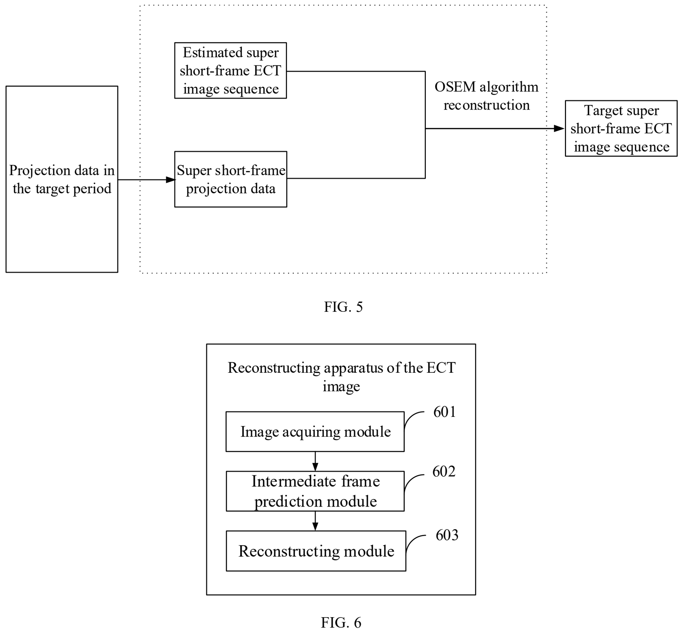

FIG. 5 shows a second manner. Referring to FIG. 5, the projection data in the target period may be divided according to a time interval of 0.025 second, to obtain several pieces of super short-frame projection data in the target period. The target super-short frame ECT image sequence in the target time period may be reconstructed according to the several pieces of super short-frame projection data and the estimated super short-frame ECT image sequence in the target period and with reference to the OSEM algorithm.

In the present embodiment, by taking an intermediate frame as one of prior images generated by an AI network such as an intermediate frame prediction network, the temporal resolution of the ECT image sequence can be improved, and a high temporal resolution less than 0.1s/frame for image reconstruction can be achieved. This introduction of the prior image may facilitate reducing noise and improving image quality. In addition, in the present embodiment, the prior image generated by the AI network such as the intermediate frame prediction network may be combined with a non-deep learning reconstruction method, stability of the non-deep learning reconstruction method and more abundant information provided by the prior image generated by the AI network such as the intermediate frame prediction network can be fully combined, thereby implementing higher-quality image reconstruction. Moreover, a training set of the intermediate frame prediction network may further be pre-trained by using a natural image, and the non-deep learning reconstruction method may be finally used for reconstruction. Therefore, high performance and stability can be maintained when projection data of different nuclides are processed.

It should be understood that, although steps in the flowchart related to the foregoing embodiments are sequentially displayed according to an instruction of an arrow, these steps are not necessarily sequentially performed according to an instruction of an arrow. Unless expressly stated in this description, these steps are not performed in a strict order, and these steps may be performed in another order. In addition, at least a part of steps in the flowchart involved in the foregoing embodiments may include multiple steps or multiple phases. These steps or phases are not necessarily performed at a same moment, but may be performed at different moments. An execution sequence of these steps or phases is not necessarily performed sequentially, but may be performed alternately or alternately with at least a part of steps or phases in another step or another step.

Based on a same invention concept, a reconstruction apparatus of an ECT image configured to implement the foregoing reconstruction method of the ECT image is provided in an embodiment of the present invention. An implementation solution provided by the apparatus is similar to the implementation solution described in the foregoing method. Therefore, a specific limitation provided in the following one or more embodiments of the reconstruction apparatus of the ECT image may refer to the foregoing limitation on the reconstruction method of the ECT image. Details are not described herein again.

In an embodiment, referring to FIG. 6, a reconstruction apparatus of an ECT image is provided, including an image acquiring module 601, an intermediate frame prediction module 602, and a reconstructing module 603.

The image acquiring module 601 is configured for acquiring a first ECT image sequence. The first ECT image sequence is obtained by scanning with an ECT scanning device. The first ECT image sequence is obtained by scanning with an ECT scanning device.

The intermediate frame prediction module 602 is configured for inputting the first ECT image sequence into a trained intermediate frame prediction network to obtain an estimated second ECT image sequence.

The reconstructing module 603 is configured for reconstructing a target second ECT image sequence based on the estimated second ECT image sequence serving as a prior image. The estimated second ECT image sequence and the target second ECT image sequence belong to a same kind of image sequence, and a temporal resolution of the second ECT image sequence is higher than that of the first ECT image sequence.

In an embodiment, the intermediate frame prediction module 602 is further configured for dividing the first ECT image sequence into a plurality of image block sequences, inputting the plurality of image block sequences into the intermediate frame prediction network to obtain intermediate frame sub-sequences corresponding to the plurality of image block sequences, obtaining an intermediate frame sequence according to the intermediate frame sub-sequences corresponding to the plurality of image block sequences, and inserting the intermediate frame sequence into the first ECT image sequence to obtain the estimated second ECT image sequence. First ECT images in a same image block sequence are temporally consecutive first ECT images.

In an embodiment, the apparatus may further include a model training module configured for selecting several frames of ECT sample images at intervals in an ECT sample image sequence to obtain an input image sequence, obtaining a training target according to an ECT sample image located among the selected ECT sample images, and obtaining the intermediate frame prediction network according to the input image sequence and the training target.

In an embodiment, the reconstructing module 603 is further configured for obtaining a first spatial kernel matrix based on the estimated second ECT image sequence serving as the prior image, obtaining a first temporal kernel matrix according to second projection data, and reconstructing the target second ECT image sequence according to the first spatial kernel matrix and the first temporal kernel matrix. A single frame duration corresponding to the second projection data is coupled to the temporal resolution of the second ECT image sequence.

In an embodiment, the reconstructing module 603 is further configured for taking the estimated second ECT image sequence as the prior image, and taking the prior image as an iterative initial image, and inputting the iterative initial image into a reconstruction algorithm to obtain the target second ECT image sequence.

In an embodiment, the reconstructing module 603 is further configured for acquiring a third ECT image sequence, and reconstructing the first ECT image sequence according to the third ECT image sequence and first projection data. A temporal resolution of the third ECT image sequence is lower than that of the first ECT image sequence. A single frame duration corresponding to the first projection data is coupled to the temporal resolution of the first ECT image sequence.

In an embodiment, the reconstructing module 603 is further configured for obtaining a second spatial kernel matrix according to the third ECT image sequence, obtaining a second temporal kernel matrix according to the first projection data, and reconstructing the first ECT image sequence according to the second spatial kernel matrix and the second temporal kernel matrix.

All modules in the foregoing reconstruction apparatus of the ECT image may be implemented in whole or in part by software, hardware, and a combination thereof. The foregoing modules may be embedded in or independent of a processor in the computer device in a hardware form, or may be stored in a memory in the computer device in a software form, so that the processor may invoke to execute an operation corresponding to the foregoing modules.

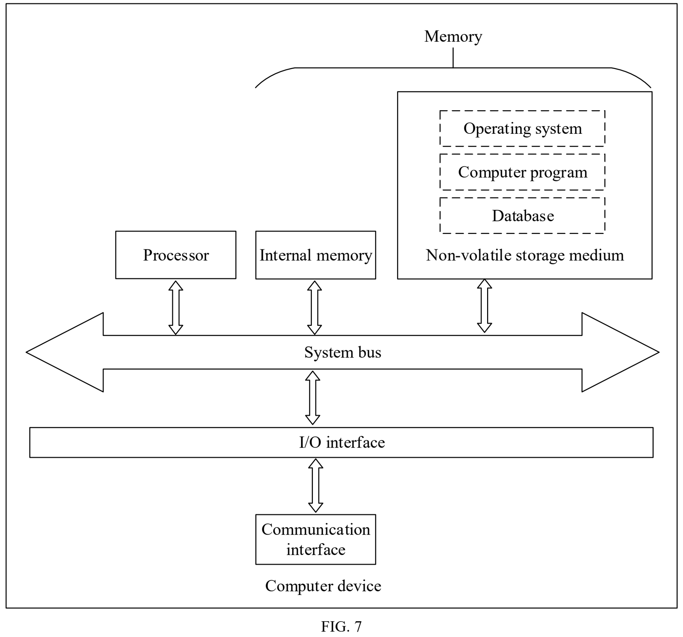

In an exemplary embodiment, a computer device is provided, and an internal structure diagram of the computer device may be shown in FIG. 7. The computer device includes a processor, a memory, an Input/Output (I/O) interface, and a communication interface. The processor, the memory, and the input/output interface are connected by the system bus, and the communication interface is connected to the system bus by the input/output interface. The processor of the computer device is configured to provide a computing and control capability. The memory of the computer device includes a non-volatile storage medium and an internal memory. The non-volatile storage medium stores an operating system, a computer program, and a database. The internal storage provides an environment for running an operating system and a computer program in a non-volatile storage medium. The database of the computer device is configured to store the data involved in the foregoing method. The input/output interface of the computer device is configured to exchange information between the processor and the external device. The communication interface of the computer device is configured to communicate with an external terminal by a network connection. The computer program is executed by the processor to implement the reconstruction method of the ECT image.

One skilled in the art may understand that the structure shown in FIG. 7 is merely a block diagram of some structures related to the solutions of the present invention, and does not constitute a limitation on a computer device to which the solutions of the present invention are applied. A specific computer device may include more or fewer components than those shown in the figure, or combine some components, or have different component arrangements.

In an embodiment, a computer device is provided, including a memory and a processor. The memory stores a computer program, and the processor implements steps in the foregoing method embodiments when executing the computer program.

In an embodiment, a computer-readable storage medium is provided, the computer program is stored on the computer-readable storage medium, and steps in the foregoing method embodiments are implemented when the computer program is executed by a processor.

In an embodiment, a computer program product is provided, a computer program is stored in the computer program product, and the computer program is executed by a processor to implement the steps in the foregoing method embodiments.

It should be noted that user information (including but not limited to user equipment information, personal information of the user, and the like) and data (including but not limited to data used for analysis, stored data, and displayed data) involved in the present invention are information and data that are authorized by the user or that are fully authorized by each party, and collection, use, and processing of related data need to comply with related regulations.

One skilled in the art may understand that all or a part of the processes in the methods in the foregoing embodiments may be implemented by a computer program instructing related hardware. The computer program may be stored in a non-volatile computer readable storage medium. When the computer program is executed, the processes in the foregoing methods embodiments may be included. Any reference to a memory, a database, or another medium used in the embodiments provided in the present invention may include at least one of a non-volatile memory or a volatile memory. The non-volatile memory may include a Read-Only Memory (ROM), a magnetic tape, a floppy disk, a flash memory, an optical memory, a high-density embedded non-volatile memory, a Resistive Random Access Memory (ReRAM), a Magneto resistive Random Access Memory (MRAM), a Ferroelectric Random Access Memory (FRAM), a Phase Change Memory (PCM), a graphene memory, and the like. The volatile memory may include a Random Access Memory (RAM), an external cache, or the like. As an illustration and not a limitation, the RAM may be in multiple forms, such as a Static Random Access Memory (SRAM) or a Dynamic Random Access Memory (DRAM). The databases involved in the embodiments provided in the present invention may include at least one of a relational database or a non-relational database. The non-relational database may include a distributed database based on a block chain or the like, which is not limited thereto. The processor involved in the embodiments provided in the present invention may be a general purpose processor, a central processing unit, a graphics processor, a digital signal processor, a programmable logic device, a quantum computing-based data processing logic device, an Artificial Intelligence (AI) processor, or the like, which is not limited thereto.

**Claims**

1. A reconstruction method of an Emission Computed Tomography (ECT) image, **characterized by** comprising:

   acquiring a first ECT image sequence;
   inputting the first ECT image sequence into a trained intermediate frame prediction network to obtain an estimated second ECT image sequence; and
   reconstructing a target second ECT image sequence based on the estimated second ECT image sequence serving as a prior image, wherein temporal resolutions of both the target second ECT image sequence and the estimated second ECT image sequence are higher than that of the first ECT image sequence.

2. The reconstruction method of the ECT image of claim 1, wherein inputting the first ECT image sequence into the trained intermediate frame prediction network to obtain the estimated second ECT image sequence further comprises:

> inputting the first ECT image sequence into the trained intermediate frame prediction network to obtain a corresponding intermediate frame sequence; and
> inserting the intermediate frame sequence into the first ECT image sequence to obtain the estimated second ECT image sequence.

3. The reconstruction method of the ECT image of claim 2, wherein inputting the first ECT image sequence into the trained intermediate frame prediction network to obtain the corresponding intermediate frame sequence further comprises:
inputting partial images of the first ECT image sequence into the trained intermediate frame prediction network based on difference between adjacent images in the first ECT image sequence to obtain the corresponding intermediate frame sequence.

4. The reconstruction method of the ECT image of claim 2 or claim 3, wherein inputting the first ECT image sequence into the trained intermediate frame prediction network to obtain the corresponding intermediate frame sequence further comprises:

> dividing the first ECT image sequence into a plurality of image block sequences, wherein first ECT images in a same image block sequence are temporally consecutive first ECT images;
> inputting the plurality of image block sequences into the intermediate frame prediction network to obtain intermediate frame sub-sequences corresponding to the plurality of image block sequences; and
> obtaining an intermediate frame sequence according to the intermediate frame sub-sequences corresponding to the plurality of image block sequences.

5. The reconstruction method of the ECT image of claim 3, wherein inputting the first ECT image sequence into the trained intermediate frame prediction network to obtain the estimated second ECT image sequence further comprises:
performing block processing on the first ECT image sequence to obtain a plurality of image block sequences, traversing the plurality of image block sequences, for each of the plurality of image block sequences, and calculating a difference value of adjacent images in the image block sequence,

> in response to the difference value of any two adjacent images in the image block sequence reaching a preset threshold, inputting the image block sequence into the trained intermediate frame prediction network, and performing frame insertion processing on the image block sequence according to an output result of the intermediate frame prediction network, to obtain an image block sequence after frame insertion;
> in response to the difference value of any two adjacent images in the image block sequence not reaching the preset threshold, inserting an intermediate image between the two adjacent images in the image block sequence, to obtain an image block sequence after frame insertion, wherein the intermediate image is obtained based the two adjacent images; and
> arranging and integrating a plurality of image block sequences after frame insertion to obtain the estimated second ECT image sequence.

6. The reconstruction method of the ECT image of any one of claims 2 to 5, wherein the intermediate frame prediction network is configured to acquire a quantity difference between the quantity of first ECT images in a target period and the quantity of second ECT images in the target period, divide the quantity difference by the quantity of first ECT images in the target period, and take a divided result as the quantity of intermediate frames in each of the plurality of image block sequences.

7. The reconstruction method of the ECT image of any one of claims 1 to 6, wherein acquiring the trained intermediate frame prediction network further comprises:

> selecting several frames of ECT sample images at intervals in an ECT sample image sequence to obtain an input image sequence;
> obtaining a training target according to an ECT sample image located among the selected frames of ECT sample images; and
> obtaining the trained intermediate frame prediction network by training according to the input image sequence and the training target.

8. The reconstruction method of the ECT image of claim 7, wherein before obtaining the trained intermediate frame prediction network by training according to the input image sequence and the training target, the method further comprises:

training the intermediate frame prediction network based on a natural image sample set, wherein the natural image sample set comprises a plurality of natural images and a target natural image, a timestamp of the target natural image and timestamps of the plurality of natural images are distributed at interval, and the quantity of images in the natural image sample set is greater than the total quantity of images in the input image sequence and the training target.

9. The reconstruction method of the ECT image of any one of claims 1 to 8, wherein reconstructing the target second ECT image sequence based on the estimated second ECT image sequence serving as the prior image further comprises:

obtaining a first spatial kernel matrix based on the estimated second ECT image sequence serving as the prior image;

obtaining a first temporal kernel matrix according to second projection data, wherein a single frame duration corresponding to the second projection data is coupled to the temporal resolution of the second ECT image sequence; and

reconstructing the target second ECT image sequence according to the first spatial kernel matrix and the first temporal kernel matrix.

10. The reconstruction method of the ECT image of claim 9, further comprising:
dividing raw data by scanning with an ECT scanning device in a target period according to the temporal resolution of the second ECT image sequence to obtain the second projection data.

11. The reconstruction method of the ECT image of any one of claims 1 to 10, wherein reconstructing the target second ECT image sequence based on the estimated second ECT image sequence serving as the prior image further comprises:

taking the estimated second ECT image sequence as the prior image, and taking the prior image as an iterative initial image; and

inputting the iterative initial image into a reconstruction algorithm to obtain the target second ECT image sequence.

12. The reconstruction method of the ECT image of any one of claims 1 to 11, further comprising:

acquiring a third ECT image sequence, wherein a temporal resolution of the third ECT image sequence is lower than that of the first ECT image sequence; and

reconstructing the first ECT image sequence according to the third ECT image sequence and first projection data, wherein a single frame duration corresponding to the first projection data is coupled to the temporal resolution of the first ECT image sequence.

13. A reconstruction method of an ECT image, **characterized by** comprising:

acquiring ECT image data;

obtaining a first ECT image sequence by image reconstruction based on the ECT image data, wherein the first ECT image sequence comprises a plurality of first ECT images corresponding to a plurality of first timestamps;

generating a plurality of estimated second ECT images based on the first ECT image sequence, wherein a plurality of second timestamps corresponding to the plurality of estimated second ECT images are distributed at intervals with the plurality of first timestamps; and

reconstructing a target second ECT image based on the plurality of first ECT images and the plurality of estimated second ECT images.

14. The reconstruction method of the ECT image of claim 13, wherein a time interval between at least two adjacent timestamps in the plurality of second timestamps is less than that between any two adjacent timestamps in the plurality of first timestamps;

at least one timestamp in the plurality of second timestamps is not comprised in the plurality of first timestamps; or

at least one timestamp in the plurality of second timestamps is between two adjacent timestamps in the plurality of first timestamps.

**15.** A computer device, comprising a memory and a processor, **characterized in that** the memory stores a computer program, and when the computer program is executed by the processor, the reconstruction method of the ECT image of any one of claims 1 to 14 is realized.

Acquiring a first ECT image sequence — S101

Inputting the first ECT image sequence into a trained intermediate frame prediction network to obtain an estimated second ECT image sequence — S102

Reconstructing a target second ECT image sequence based on the estimated second ECT image sequence serving as a prior image — S103

FIG. 1

FIG. 2

EP 4 769 318 A1

FIG. 3

```
┌─────────────────┐
│ Estimated super │      ┌─────────────────┐
│ short-frame ECT │─────▶│ First spatial   │
│ image sequence  │      │ kernel matrix   │──────┐
└─────────────────┘      │ Ks'             │      │
                         └─────────────────┘      │
┌─────────────────┐                               │    ┌─────────────────┐  EM algorithm      ┌─────────────────┐
│ Projection data │                               ├───▶│ First space-time│                    │ Target super    │
│ in the target   │                               │    │ kernel matrix K'│───────────────────▶│ short-frame ECT │
│ period          │                               │    └─────────────────┘  Reconstruction    │ image sequence  │
└────────┬────────┘                               │                                           └─────────────────┘
         │        ┌─────────────────┐             │
         │        │ Super short-    │   ┌──────────────────┐
         └───────▶│ frame projection│──▶│ First temporal   │
                  │ data            │   │ kernel matrix KT'│
                  └─────────────────┘   └──────────────────┘
```

FIG. 4

Estimated super short-frame ECT image sequence

Projection data in the target period

Super short-frame projection data

OSEM algorithm reconstruction

Target super short-frame ECT image sequence

FIG. 5

Reconstructing apparatus of the ECT image

Image acquiring module — 601

Intermediate frame prediction module — 602

Reconstructing module — 603

FIG. 6

FIG. 7

# EP 4 769 318 A1

EUROPEAN SEARCH REPORT

**Application Number**

EP 25 22 7126

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | CN 112 017 258 A (SHANGHAI UNITED IMAGING HEALTHCARE CO LTD) 1 December 2020 (2020-12-01) * paragraph [0045] - paragraph [0055] * * paragraph [0072] - paragraph [0079] * ----- | 1-15 | INV. G06T12/20 |
| A | ZHAO Z. ET AL: "Dynamic PET Image Reconstruction Using Spatiotemporal Kernel Method With Deep Image Prior", IEEE CONFERENCE RECORD - NUCLEAR SCIENCE SYMPOSIUM & MEDICAL IMAGING CONFERENCE., 25 September 2024 (2024-09-25), pages 1-1, XP093381356, DOI: 10.1109/NSS/MIC/RTSD57108.2024.10657386 * the whole document * ----- | 1-15 | |
| A | WANG GUOBAO: "High Temporal-Resolution Dynamic PET Image Reconstruction Using a New Spatiotemporal Kernel Method", IEEE TRANSACTIONS ON MEDICAL IMAGING IEEE, USA, vol. 38, no. 3, March 2019 (2019-03), pages 664-674, XP011712613, ISSN: 0278-0062, DOI: 10.1109/TMI.2018.2869868 [retrieved on 2019-03-01] * the whole document * ----- | 1-15 | **TECHNICAL FIELDS SEARCHED (IPC)** G06T |

The present search report has been drawn up for all claims

| Place of search | Date of completion of the search | Examiner |
|---|---|---|
| Munich | 14 April 2026 | Werling, Alexander |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

....................................................................................................

& : member of the same patent family, corresponding document

EPO FORM 1503 03.82 (P4C01)

24

## ANNEX TO THE EUROPEAN SEARCH REPORT
## ON EUROPEAN PATENT APPLICATION NO.

EP 25 22 7126

This annex lists the patent family members relating to the patent documents cited in the above-mentioned European search report.
The members are as contained in the European Patent Office EDP file on
The European Patent Office is in no way liable for these particulars which are merely given for the purpose of information.

14-04-2026

| Patent document cited in search report | Publication date | Patent family member(s) | Publication date |
|---|---|---|---|
| CN 112017258 A | 01-12-2020 | NONE | |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202411928855